# FASCICULE DE BREVET EUROPEEN

(11) **EP 1 164 676 B1**
(45) Date de publication et mention de la délivrance du brevet: **27.04.2011**
(21) Numéro de dépôt: 01401519.2
(22) Date de dépôt: 12.06.2001
(51) Int. Cl.: H02G 3/12

(54) **Dispositif de montage d'un appareil électrique sur un conduit de câblage**
Vorrichtung zur Befestigung eines elektrischen Geräts auf einem Kabelkanal
Mounting device for an electrical apparatus on a cable duct

(30) Priorité: 16.06.2000 FR 0007727
(43) Date de publication de la demande: 19.12.2001
(73) Titulaire: PLANET WATTOHM, 60300 Senlis (FR)
(72) Inventeur: Destruel, Marc, 60300 Senlis (FR)
(74) Mandataire: Barbin le Bourhis, Joël

(56) Documents cités:
- EP-A- 0 391 713
- DE-A- 3 643 559
- FR-A- 2 709 614

## Description

L'invention concerne un dispositif de montage d'un appareil électrique sur un conduit de câblage ouvert. Un tel conduit est un profilé à section sensiblement en forme de U. Son ouverture, longitudinale et continue, est destinée à être obturée par un couvercle formé par un ou plusieurs tronçons d'un autre profilé et venant s'emboîter sur le conduit.

Pour ce faire, ledit conduit comporte deux rainures parallèles définies respectivement le long des bords longitudinaux de sa propre ouverture. Tous ces éléments sont par exemple obtenus par extrusion ou filage d'un matériau tel que, typiquement, une matière plastique semi-rigide, de l'aluminium ou autre. On peut aussi les réaliser par formage à partir de tôle que l'on plie.

On connaît un dispositif de montage d'un appareil électrique susceptible de venir s'adapter sur le conduit de câblage lui-même. Le dispositif de montage se substitue au couvercle à un emplacement choisi du conduit de câblage. Des appareils électriques susceptibles d'être installés de cette façon sont typiquement des prises de courant, des prises téléphoniques, des interrupteurs, etc...

Par exemple, le brevet français publié sous le N° 2 666 479 décrit un dispositif de montage de ce genre formant une boîte dans laquelle vient se loger l'appareil électrique.

Pendant le câblage, il est souhaitable que le support sur lequel est monté l'appareil électrique puisse être déplacé longitudinalement le long du conduit de câblage, l'emplacement définitif de l'appareil électrique étant déterminé ultérieurement.

L'invention concerne un dispositif de montage d'un tel appareil électrique, en deux parties, l'une recevant l'appareil électrique et l'autre formant plastron venant le recouvrir et l'entourer tout en refermant localement le conduit de câblage.

L'idée de base de l'invention consiste à immobiliser suivant la direction longitudinale du conduit la première partie du dispositif de montage contenant l'appareil électrique, à la mise en place, par emboîtement à force, de la deuxième partie dudit dispositif de montage, formant plastron.

On connaît déjà, d'après le document DE - A - 36 43 559, un dispositif comportant un support et un plastron, mais le support est conformé en sorte de se fixer lui-même au sein des rainures d'un conduit de câblage, au moyen de flancs rabattus, tandis que le plastron comporte de petites fiches qui ne servent qu'à consolider le maintien des flancs rabattus à l'intérieur desdites rainures.

Plus particulièrement, l'invention concerne donc un dispositif de montage d'un appareil électrique sur un conduit de câblage ouvert du genre comprenant deux rainures parallèles définies respectivement le long des bords longitudinaux de sa propre ouverture, comprenant un support dudit appareil muni de moyens d'emboîtement coopérant avec ledit conduit et un plastron conformé pour venir se fixer audit support, caractérisé en ce que ledit plastron comporte deux bords longitudinaux rabattus propres à s'engager respectivement dans lesdites rainures d'un tel conduit de câblage et conformés pour s'encastrer sous contrainte dans celles-ci pour immobiliser longitudinalement ledit support à la fixation dudit plastron sur celui-ci.

Dans la définition qui précède, le support de l'appareil peut prendre la forme d'un simple cadre sur lequel sont, de préférence, prévus des moyens de fixation de l'appareil ; il peut aussi prendre la forme d'une boîte susceptible de s'intégrer à l'intérieur du conduit de câblage et permettant d'isoler électriquement l'appareil électrique dans ce conduit. Une telle boîte peut être d'un seul tenant avec une partie formant cadre, l'ensemble constituant ledit support et assurant la fixation.

Selon un autre mode de réalisation possible, le support comporte une partie en forme de cadre à laquelle on peut raccorder un, voire deux carters d'isolation reconstituant au moins en partie une boîte susceptible d'accueillir l'appareil électrique. Le carter peut être constitué par exemple d'une demi-boîte assemblée à la face arrière du cadre, voire de deux demi-boîtes complémentaires reconstituant une boîte complète. La partie supérieure du support formant cadre du support peut être de dimensions sensiblement plus importantes que la boîte elle-même, pour pouvoir se monter sur des conduits de plus grande largeur, éventuellement munis de plusieurs cloisons.

On peut aussi imaginer un ensemble support-plastron dont les ouvertures superposées, laissant apparaître la face avant de l'appareil électrique, sont excentrées par rapport à l'axe du conduit de câblage.

Pour stabiliser le positionnement longitudinal du support au moment de la fixation du plastron, on peut imaginer plusieurs solutions.

Selon une première possibilité, les surfaces extérieures des deux bords longitudinaux rabattus dudit plastron peuvent être espacées d'une distance correspondant (légèrement par excès) à celle qui sépare les surfaces intérieures des bords extérieurs desdites rainures du conduit de câblage. Cette distance peut donc être telle que lesdits bords longitudinaux rabattus d'une part et lesdits bords extérieurs d'autre part entrent en contact frottant au montage dudit plastron.

Dans ce cas, l'emboîtement à force du plastron sur le support sollicite les parois latérales du conduit de câblage à s'écarter, ce qui provoque le serrage du plastron donc du support. Inversement, les surfaces intérieures des deux bords longitudinaux rabattus dudit plastron peuvent être espacées d'une distance correspondant (légèrement par défaut) à celle qui sépare les surfaces extérieures des bords intérieurs desdites rainures d'un conduit, ladite distance étant telle que les bords longitudinaux rabattus d'une part et les bords intérieurs d'autre part entrent en contact frottant au montage du plastron.

Dans ce cas, le serrage entraînant l'immobilisation du plastron et du support s'opère contre les bords intérieurs des rainures. On peut encore imaginer la combinaison des deux moyens de serrage.

En particulier, les surfaces des deux bords longitudinaux rabattus précités peuvent être munies de reliefs coopérant avec les bords correspondants des rainures. Ces reliefs sont de préférence définis sur les surfaces intérieures des deux bords longitudinaux rabattus. Ils peuvent avoir la forme de nervures parallèles s'étendant sensiblement perpendiculairement à la direction longitudinale desdits bords longitudinaux rabattus du plastron. Au montage du plastron, ces reliefs se déforment et s'écrasent légèrement en entrant en contact avec les bords en regard des rainures.

Selon une autre caractéristique avantageuse, les côtés longitudinaux du support comportent des crochets élastiques et des rebords saillants espacés, adaptés pour respectivement prendre appui de part et d'autre des parois longitudinales intérieures définissant les deux rainures d'un tel conduit. Les crochets sont définis entre des découpes pratiquées sur des surfaces latérales longitudinales du support. Ces découpes donnent une certaine élasticité aux crochets leur permettant de s'effacer vers l'intérieur au moment de l'emboîtement à force du support. Par ce montage, le support peut coulisser tout en étant emboîté sur le conduit, en l'absence du plastron.

Avantageusement, le plastron comporte des butées venant s'adosser auxdits crochets pour les immobiliser lorsqu'ils sont en prise avec les parois longitudinales intérieures définissant les deux rainures d'un conduit de câblage précité. Ceci a pour effet d'éviter un "déclipsage" intempestif lors du démontage d'une prise mâle entraînant un certain effort de traction. Le support comporte des fenêtres adjacentes aux crochets et dans lesquelles s'engagent lesdites butées, au moment de l'assemblage du plastron et du support. Le support et le plastron sont munis de moyens d'encliquetage, connus en soi, par lesquels ils peuvent être fixés l'un à l'autre en position sur le conduit, cet assemblage provoquant l'immobilisation longitudinale du support, comme expliqué plus haut.

Selon encore une autre caractéristique avantageuse, connue en soi, au moins une face latérale transversale du support porte des éléments d'assemblage en saillie conformés pour coopérer avec des éléments d'assemblage complémentaires d'un support semblable, les deux supports étant montés et rattachés côte à côte dans un tel conduit. Par ce moyen, on peut disposer côte à côte plusieurs dispositifs de montage conformes à l'invention.

Un tel dispositif de montage peut en outre être conçu pour accueillir un ou plusieurs appareils côte à côte. Si le dispositif de montage doit accueillir plusieurs appareils, sa longueur (c'est-à-dire sa dimension suivant le sens longitudinal parallèle au conduit de câblage) est augmentée. Autrement dit, le support comme le plastron comportent des ouvertures de longueurs différentes selon le nombre d'appareils électriques à accueillir.

L'invention sera mieux comprise et d'autres avantages de celle-ci apparaîtront plus clairement à la lumière de la description qui va suivre, donnée uniquement à titre d'exemple et faite en référence aux dessins annexés dans lesquels :
- la figure 1 est une vue en perspective, de dessus, d'un support du dispositif de montage conforme à l'invention ;
- la figure 2 est une vue en perspective, de dessous, du même support ;
- la figure 3 est une vue en perspective, de dessous, d'un plastron venant se monter sur le support des figures 1 et 2 ;
- la figure 4 est une vue en coupe transversale représentant le support installé sur un conduit de câblage avant montage du plastron ;
- la figure 5 est une vue analogue à la figure 4, après montage du plastron ;
- la figure 6 est une vue d'un autre support analogue à celui de la figure 1 mais susceptible d'accueillir plusieurs appareils électriques côte à côte ;
- la figure 7 est une vue en perspective d'une demi-boîte d'isolation, susceptible d'être fixée au support et apte à se loger dans le conduit ;
- la figure 8 est une vue en coupe transversale du support installé dans le conduit avec deux demi-boîtes conformes à la figure 7 ; et
- la figure 9 est une vue analogue à la figure 8 dans laquelle une seule demi-boîte est fixée au support et coopère avec une cloison longitudinale pour permettre l'isolement électrique du composant logé dans ladite demi-boîte.

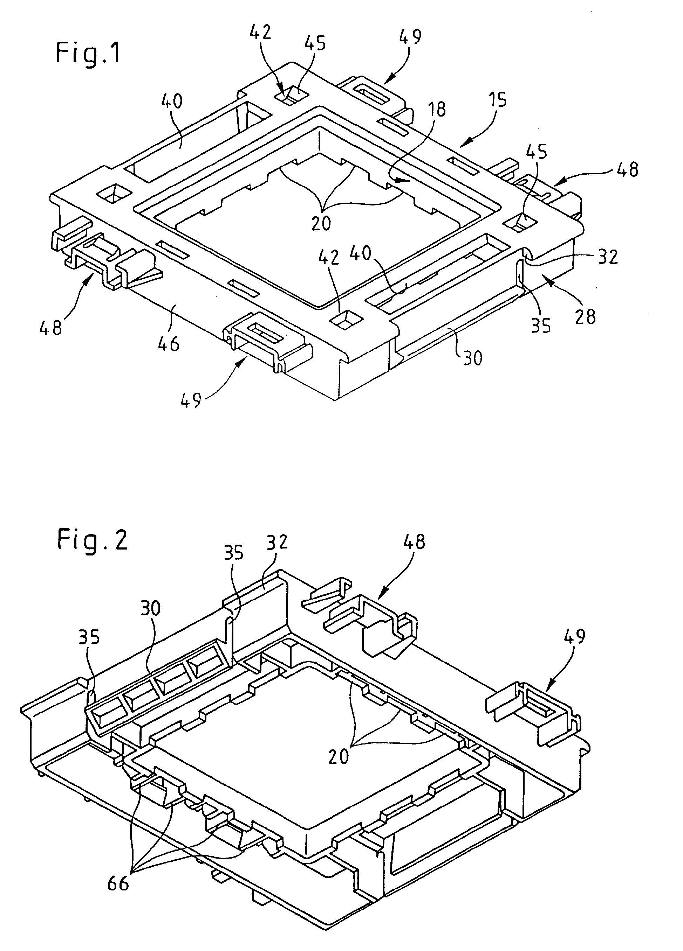

En se reportant plus particulièrement aux figures 1 à 5, on a représenté un dispositif de montage 11 d'un appareil électrique destiné à venir prendre place sur un conduit de câblage ouvert 12, connu en soi, constitué par un profilé en matière plastique semi-rigide, obtenu par extrusion. Le conduit peut aussi être obtenu par l'un des procédés mentionnés ci-dessus. Les éléments constitutifs du dispositif de montage 11 sont de préférence en matière plastique semi-rigide et obtenus par moulage. Le conduit de câblage est classique, il a une section générale en forme de U et comprend deux rainures parallèles 13 définies respectivement le long des bords longitudinaux de sa propre ouverture. Chaque rainure 13 est délimitée par une portion de bord d'une paroi latérale 12a du conduit, par une paroi de fond 14 perpendiculaire à la paroi latérale et par une paroi longitudinale interne 26, globalement parallèle à la paroi latérale 12a. Le dispositif de montage comprend un support 15 adapté pour accueillir un appareil électrique et un plastron 16, formant cadre enjoliveur, conformé pour venir se fixer au support.

Dans l'exemple, le support 15 a également la forme générale d'un cadre. Il comporte une fenêtre 18, ici carrée ou rectangulaire, dont le bord intérieur est muni de créneaux 20 susceptibles d'accueillir des dents élastiques faisant partie d'un appareil électrique, non représenté.

Dans l'exemple de la figure 1, l'ouverture 18 est carrée et dimensionnée pour accueillir un appareil électrique de dimensions correspondantes. Le plastron 16 forme un cadre qui est conformé pour venir se fixer au support 15. Il comporte une fenêtre 22, ici carrée, venant se superposer à celle du support 15 en forme de cadre.

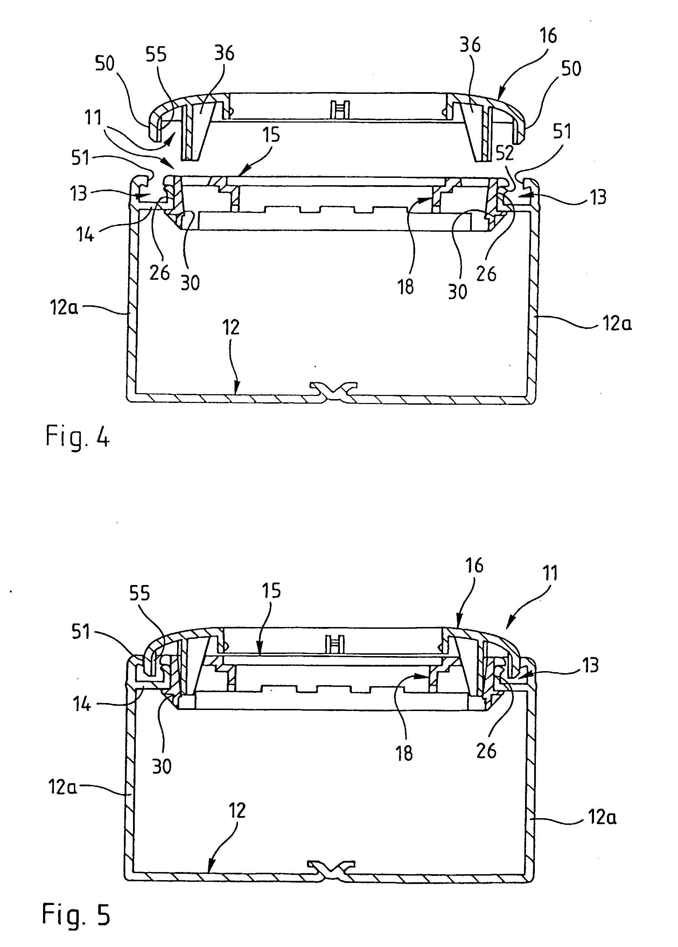

Comme on le voit sur la figure 4, le support 15 est conformé pour venir s'emboîter entre les parois longitudinales internes 26 des deux rainures 13 du conduit de câblage.

Pour ce faire, les côtés longitudinaux 28 du support comportent des crochets élastiques 30, inférieurs, et des rebords saillants 32, supérieurs, espacés en hauteur pour pouvoir respectivement prendre appui sur les bords des parois longitudinales internes 26. Les rebords saillants 32 reposent sur les bords extérieurs de ces parois longitudinales et les crochets élastiques s'engagent sous les bords intérieurs de ces mêmes parois longitudinales internes, c'est-à-dire contre les parois de fond 14.

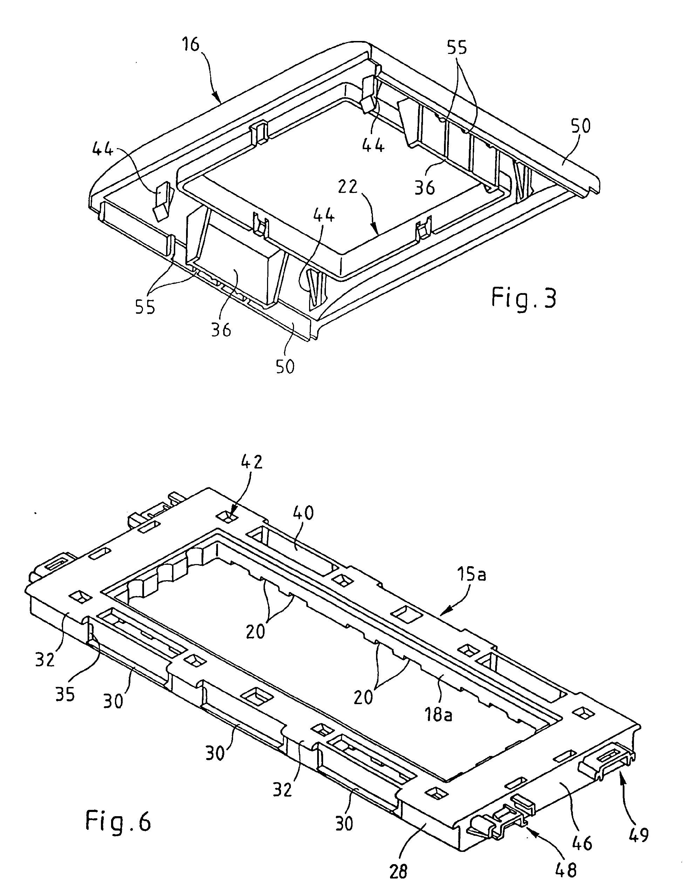

Comme on le voit sur les figures 1 et 6, les rebords saillants 32 et les crochets élastiques 30 sont décalés les uns par rapport aux autres, longitudinalement, le long de chaque côté du support. Cet agencement permet d'obtenir une plus grande rigidité des rebords saillants et une plus grande élasticité des crochets.

De façon connue en soi, les crochets 30 sont définis entre des découpes 35 pratiquées sur les côtés longitudinaux 28 du support.

En outre, le plastron 16 comporte des butées 36 venant s'adosser auxdits crochets pour les immobiliser lorsqu'ils sont en prise avec les bords intérieurs des parois longitudinales internes 26.

Comme cela est visible sur la figure 5, l'immobilisation des crochets élastiques 30 par les butées 36 renforce la résistance à l'arrachement du support lorsque celui-ci est installé sur le conduit avec son plastron. Le support 18 comporte des fenêtres 40 adjacentes auxdits crochets et dans lesquelles lesdites butées peuvent s'engager lorsque le plastron est assemblé au support.

Le support et le plastron sont munis de moyens d'encliquetage, connus en soi, par lesquels ils peuvent être fixés l'un à l'autre en position sur le conduit. Ces moyens d'encliquetage sont constitués par des trous 42 pratiqués dans le support et par des dents 44 faisant saillie de la face intérieure dudit plastron. Les trous 42 ont ici une forme carrée et chacun comporte une rampe 45 dans son épaisseur, facilitant l'engagement des dents 44 du plastron.

Enfin, il est à noter que chaque face latérale transversale 46 du support porte des éléments d'assemblage 48, 49, d'un type connu, conformés pour coopérer avec des éléments d'assemblage complémentaires d'un support semblable. De cette façon, il est possible de monter plusieurs supports dans le conduit et de les rattacher côte à côte pour accueillir un plus grand nombre d'appareils électriques, en les maintenant jointifs pour éviter la pénétration de corps étrangers.

Sur la figure 6, les éléments de structure analogues à ceux du support de la figure 1, portent les mêmes références numériques. Le support 15a est dimensionné pour accueillir trois appareils côte à côte ; la fenêtre 18a est donc rectangulaire et allongée dans le sens longitudinal. Bien entendu, il lui correspond un plastron de forme et dimensions correspondantes qui n'a pas été représenté. Un ensemble support-plastron pour deux appareils peut aussi être défini sur le même modèle.

En considérant plus particulièrement la figure 3, on voit que le plastron comporte deux bords longitudinaux rabattus 50, propres à s'engager respectivement dans les rainures 13 d'un conduit de câblage, tel que celui de la figure 4.

Selon l'invention, ces bords sont conformés pour s'encastrer sous contrainte dans lesdites rainures pour stabiliser le positionnement longitudinal du support, lorsque le plastron est fixé sur celui-ci par engagement des crochets 44 dans les trous 42 correspondants.

Selon une possibilité, les surfaces extérieures des deux bords longitudinaux rabattus 50 sont espacées d'une distance correspondant à celle qui sépare les surfaces intérieures des bords extérieurs 51 des rainures 13 d'un conduit de câblage (mais légèrement par excès), de sorte que les bords longitudinaux rabattus 50 du plastron d'une part et les bords extérieurs 51 des rainures d'autre part entrent en contact frottant au montage du plastron, ce qui immobilise le support dans la position qu'il occupe sur le conduit.

L'inverse est également possible, c'est-à-dire que les surfaces intérieures des deux bords longitudinaux rabattus 50 du plastron peuvent être espacées d'une distance correspondant (légèrement par défaut) à celle qui sépare les surfaces extérieures des bords intérieurs 52 des rainures d'un tel conduit de sorte que les bords longitudinaux rabattus d'une part et les bords intérieurs 52 d'autre part entrent en contact frottant au montage dudit plastron, ce qui entraîne l'immobilisation du support. Les deux dispositions énoncées ci-dessus peuvent être combinées.

Avantageusement, les surfaces des deux bords longitudinaux rabattus précités peuvent être munies de reliefs coopérant avec les bords correspondants desdites rainures.

Dans l'exemple, on a prévu de tels reliefs sur les surfaces intérieures des deux bords longitudinaux rabattus 50 du plastron. Ils ont la forme de nervures 55 parallèles s'étendant sensiblement perpendiculairement à la direction longitudinale desdits bords rabattus. Ces nervures ont tendance à se déformer et à s'écraser contre les bords intérieurs 52 des rainures.

Ainsi, l'agencement conforme à l'invention qui vient d'être décrit, facilite le montage et le câblage des appareils électriques installés dans de tels dispositifs de montage.

Dans un premier temps en effet, seul le support 15 est emboîté sur le conduit et on y monte l'appareil électrique choisi (non représenté). L'ensemble peut être déplacé suivant la direction longitudinale du conduit, dans un sens ou dans l'autre, ce qui facilite le raccordement de l'appareil électrique aux fils électriques qui sont installés dans le conduit.

Lorsque ces opérations sont achevées, l'installateur détermine la position définitive de l'appareil électrique, le long du conduit et ajuste, si nécessaire, la position du support. Il suffit alors d'installer le plastron par simple encliquetage à force, pour immobiliser définitivement l'ensemble du dispositif de montage sur le conduit de câblage. C'est la situation illustrée à la figure 5.

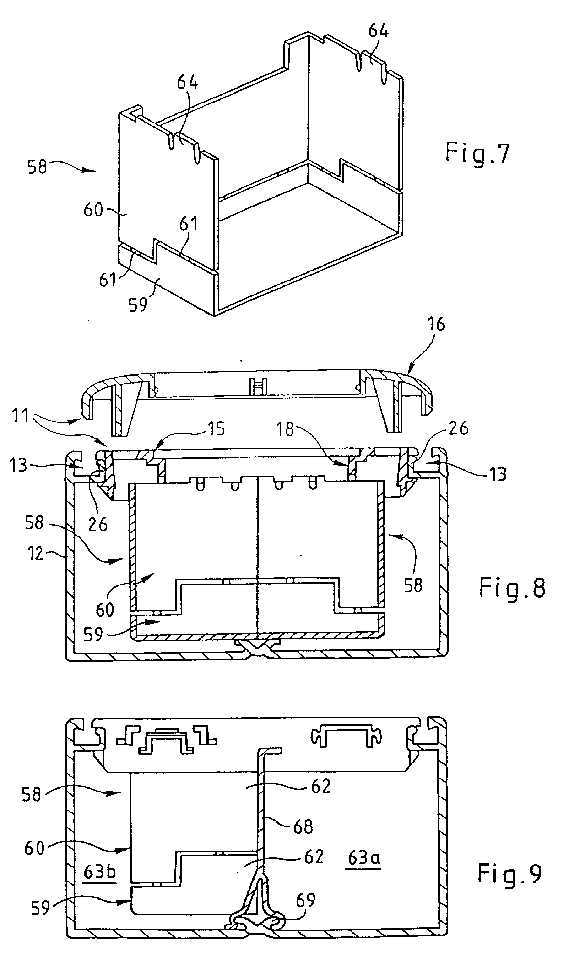

La figure 7 représente un moyen d'isolation, sous la forme d'une demi-boîte d'isolation 58 en matière plastique moulée, susceptible de venir s'adapter à la face inférieure d'un support tel que celui de la figure 1 ou de la figure 6. Le fond 59 de la demi-boîte est raccordé au corps 60 de celle-ci par des pattes sécables 61 ; il peut donc être éliminé au montage, si nécessaire. Les bords supérieurs du corps de boîte comportent des encoches définissant des pattes 64 venant s'encastrer entre des ailettes saillantes 66 du support.

Sur la figure 8, on a installé deux demi-boîtes 58 côte à côte, qui reconstituent une boîte complète isolant complètement l'appareil électrique du reste du conduit de câblage.

Dans l'exemple de la figure 9, on n'a monté qu'une demi-boîte 58. Ses faces 62, transversales par rapport au conduit peuvent être prolongées selon la direction longitudinale de celui-ci par des éléments de cloison 68 enfichés sur une nervure de fond 69. Dans ces conditions, l'appareil électrique se situe à la fois dans la demi-boîte et un demi-conduit 63a et se trouve complètement isolé de l'autre demi-conduit 63b.

## Revendications

1. Dispositif de montage d'un appareil électrique sur un conduit de câblage ouvert du genre comprenant deux rainures parallèles (13) définies respectivement le long des bords longitudinaux de sa propre ouverture, comprenant un support (15) dudit appareil muni de moyens d'emboîtement (30, 32) coopérant avec ledit conduit et un plastron (16) conformé pour venir se fixer audit support, **caractérisé en ce que** ledit plastron, en matériau semi-rigide, comporte deux bords longitudinaux rabattus (50) propres à s'engager respectivement dans lesdites rainures (13) d'un tel conduit de câblage et conformés pour s'encastrer sous contrainte dans celles-ci pour immobiliser longitudinalement ledit support à la fixation dudit plastron sur celui-ci.

2. Dispositif selon la revendication 1, **caractérisé en ce que** les surfaces extérieures des deux bords longitudinaux rabattus (50) précités dudit plastron sont espacées d'une distance correspondant à celle qui sépare les surfaces intérieures des bords extérieurs (51) desdites rainures (13) d'un tel conduit et telle que lesdits bords longitudinaux rabattus d'une part et lesdits bords extérieurs d'autre part entrent en contact frottant au montage dudit plastron.

3. Dispositif selon la revendication 1 ou 2, **caractérisé en ce que** les surfaces intérieures des deux bords longitudinaux rabattus (50) précités dudit plastron sont espacées d'une distance correspondant à celle qui sépare les surfaces extérieures des bords intérieurs (52) desdites rainures (13) d'un tel conduit et telle que lesdits bords longitudinaux rabattus d'une part et lesdits bords intérieurs d'autre part entrent en contact frottant au montage dudit plastron.

4. Dispositif selon l'une des revendications précédentes, **caractérisé en ce que** les surfaces des deux bords longitudinaux rabattus (50) précités sont munies de reliefs (55) coopérant avec les bords correspondants desdites rainures.

5. Dispositif selon la revendication 4, **caractérisé en ce que** lesdits reliefs (55) sont définis sur les surfaces intérieures des deux bords longitudinaux rabattus.

6. Dispositif selon la revendication 5, **caractérisé en ce que** ces reliefs ont la forme de nervures (55) parallèles s'étendant sensiblement perpendiculairement à la direction longitudinale desdits bords longitudinaux rabattus.

7. Dispositif selon l'une des revendications précédentes, **caractérisé en ce que** les côtés longitudinaux (28) dudit support comportent des crochets élastiques (30) et des rebords saillants (32) espacés, adaptés pour respectivement prendre appui sur les bords des parois longitudinales intérieures (26) définissant les deux rainures d'un tel conduit.

8. Dispositif selon la revendication 7, **caractérisé en ce que** lesdits rebords saillants (32) et lesdits crochets élastiques (30) sont décalés les uns par rapport aux autres, longitudinalement.

9. Dispositif selon la revendication 7 ou 8, **caractérisé en ce que**, de façon connue en soi, lesdits crochets (30) sont définis entre des découpes (35) pratiquées sur les côtés longitudinaux (28) dudit support.

10. Dispositif selon l'une des revendications 7 à 9, **caractérisé en ce que** ledit plastron (16) comporte des butées (36) venant s'adosser auxdits crochets pour les immobiliser lorsqu'ils sont en prise avec lesdites parois longitudinales intérieures (26) des deux rainures (13) d'un conduit.

11. Dispositif selon la revendication 10, **caractérisé en ce que** ledit support comporte des fenêtres (40) adjacentes auxdits crochets et dans lesquelles s'engagent lesdites butées (36) à l'assemblage dudit plastron et dudit support.

12. Dispositif selon l'une des revendications précédentes, **caractérisé en ce que** ledit support (15) a la forme générale d'un cadre dimensionné pour recevoir au moins un appareil électrique.

13. Dispositif selon l'une des revendications précédentes, **caractérisé en ce que** ledit support et ledit plastron sont munis de moyens d'encliquetage (42, 44), connus en soi, par lesquels ils peuvent être fixés l'un à l'autre, en position, sur ledit conduit.

14. Dispositif selon la revendication 13, **caractérisé en ce que** lesdits moyens d'encliquetage sont constitués par des trous (42) pratiqués dans ledit support et par des dents (44) faisant saillie de la face intérieure dudit plastron.

15. Dispositif selon l'une des revendications précédentes, **caractérisé en ce qu'**au moins une face latérale transversale dudit support porte des éléments d'assemblage (48, 49) conformés pour coopérer avec des éléments d'assemblage complémentaires d'un support semblable, les deux supports étant montés et rattachés côte à côte dans un tel conduit.

16. Dispositif selon l'une des revendications précédentes, **caractérisé en ce que** ledit support comporte des moyens de montage (66) d'un moyen d'isolation (58).

## Claims

1. A mounting device for mounting an electrical apparatus on open cable trunking of the kind comprising two parallel grooves (13) respectively defined along the longitudinal edges of its own opening, comprising a support (15) for said apparatus provided with interfitting means (30, 32) cooperating with said trunking and a plastron (16) shaped to be fixed to said support, **characterized in that** said plastron, made from semi-rigid material, comprises two folded back longitudinal edges (50) adapted to engage respectively in said grooves (13) of such trunking and shaped to forcibly embed in said grooves to immobilize said support longitudinally when said plastron is fixed to said support.

2. A device according to claim 1, **characterized in that** the outside surfaces of the two aforesaid folded back longitudinal edges (50) of said plastron are spaced apart by a distance corresponding to that which separates the inside surfaces of the outside edges (51) of said grooves (13) of such trunking and such that said folded back longitudinal edges and said outside edges enter into frictional contact on mounting said plastron.

3. A device according to claim 1 or 2, **characterized in that** the inside surfaces of the two aforesaid folded back longitudinal edges (50) of said plastron are spaced apart by a distance corresponding to that which separates the outside surfaces of the inside edges (52) of said grooves (13) of such trunking and such that said folded back longitudinal edges and said inside edges enter into frictional contact on mounting said plastron.

4. A device according to one of the preceding claims, **characterized in that** the surfaces of the aforesaid two folded back longitudinal edges (50) are provided with formations in relief (55) cooperating with the corresponding edges of said grooves.

5. A device according to claim 4, **characterized in that** said formations in relief (55) are defined on the inside surfaces of the two folded back longitudinal edges.

6. A device according to claim 5, **characterized in that** said formations in relief are in the form of parallel ribs (55) extending substantially perpendicular to the longitudinal direction of said folded back longitudinal edges.

7. A device according to one of the preceding claims, **characterized in that** the longitudinal sides (28) of said support comprise elastic hooks (30) and spaced apart projecting rims (32), adapted to bear respectively on the edges of the longitudinal inside walls (26) defining the two grooves of such trunking.

8. A device according to claim 7, **characterized in that** said projecting rims (32) and said elastic hooks (30) are longitudinally offset relative to each other.

9. A device according to claim 7 or claim 8, **characterized in that**, as in known per se, said hooks (30) are defined between cut-outs (35) formed on the longitudinal sides (28) of said support.

10. A device according to one of claims 7 to 9, **characterized in that** said plastron (16) comprises abutments (36) which come to bear on said hooks to immobilize them when they are engaged with said inside longitudinal walls (26) of the two grooves (13) of trunking.

11. A device according to claim 10, **characterized in that** said support comprises windows (40) adjacent said hooks and in which said abutments (36) engage on assembly of said plastron and said support.

12. A device according to one of the preceding claims, **characterized in that** said support (15) has the general form of a frame dimensioned to receive at least one electrical apparatus.

13. A device according to one of the preceding claims, **characterized in that** said support and said plastron are provided with snap engagement means (42, 44), which are known per se, by which they may be fixed together, in position, on said trunking.

14. A device according to claim 13, **characterized in that** said snap engaging means are constituted by holes (42) formed in said support and by teeth (44) projecting from the inside face of said plastron.

15. A device according to one of the preceding claims, **characterized in that** at least one transverse lateral face of said support carries assembly members (48, 49) formed to cooperate with complementary assembly members of a similar support, both supports being mounted and attached side by side in such trunking.

16. A device according to one of the preceding claims, **characterized in that** said support comprises mounting means (66) for mounting an insulating means.

## Patentansprüche

1. Vorrichtung zur Anbringung eines Installationsgerätes auf einem offenen Installationskanal des Typs mit zwei parallelen Nuten (13), die jeweils entlang der Längsränder seiner eigenen Öffnung ausgebildet sind, mit einem Träger (15) des Gerätes, der mit Steckmitteln (30, 32) versehen ist, die mit dem Kanal zusammenwirken und mit einer Abdeckung (16), die ausgebildet ist, um an dem Träger befestigt zu werden, **dadurch gekennzeichnet, dass** die Abdeckung aus einem halbstarren Material zwei umgebogene Längsränder (50) aufweist, die jeweils in die Nuten (13) eines derartigen Installationskanals einzugreifen vermögen und ausgebildet sind, um unter Beanspruchung in diese eingefügt zu werden, um den Träger in Längsrichtung an der Befestigung der Abdeckung auf dieser zu fixieren.

2. Vorrichtung nach Anspruch 1,
**dadurch gekennzeichnet, dass** die Außenflächen der beiden vorstehend genannten umgebogenen Längsränder (50) der Abdeckung mit einem Abstand beabstandet sind, der dem entspricht, der zwischen den Innenflächen der Außenränder (51) der Nuten (13) eines derartigen Kanals liegt, und solcher Art ist, dass die umgebogenen Längsränder einerseits und die Außenränder andererseits bei der Montage der Abdeckung in Reibungskontakt gelangen.

3. Vorrichtung nach Anspruch 1 oder 2,
**dadurch gekennzeichnet, dass** die Innenflächen der beiden vorstehend genannten umgebogenen Längsränder (50) der Abdeckung mit einem Abstand beabstandet sind, der dem entspricht, der zwischen den Außenflächen der Innenränder (52) der Nuten (13) eines derartigen Kanals liegt, und solcher Art ist, dass die umgebogenen Längsränder einerseits und die Innenränder andererseits bei der Montage der Abdeckung in Reibungskontakt gelangen.

4. Vorrichtung nach einem der vorhergehenden Ansprüche,
**dadurch gekennzeichnet, dass** die Flächen der beiden vorstehend genannten umgebogenen Längsränder (50) mit Profilen (55) versehen sind, die mit den entsprechenden Rändern der Nuten zusammenwirken.

5. Vorrichtung nach Anspruch 4,
**dadurch gekennzeichnet, dass** die Profile (55) auf den Innenflächen der beiden umgebogenen Längsränder ausgebildet sind.

6. Vorrichtung nach Anspruch 5,
**dadurch gekennzeichnet, dass** die Profile die Form von parallelen Rippen (55) haben, die im Wesentlichen senkrecht zur Längsrichtung der umgebogenen Längsränder verlaufen.

7. Vorrichtung nach einem der vorhergehenden Ansprüche,
**dadurch gekennzeichnet, dass** die Längsseiten (28) des Trägers elastische Haken (30) und voneinander beanstandete, vorstehende Ränder (32) aufweisen, die ausgebildet sind, um auf den Rändern der inneren Längswände (26), die die beiden Nuten eines derartigen Kanals bilden, jeweils in Anlage zu gelangen.

8. Vorrichtung nach Anspruch 7,
**dadurch gekennzeichnet, dass** die vorstehenden Ränder (32) und die elastischen Haken (30) bezüglich einander längs versetzt sind.

9. Vorrichtung nach Anspruch 7 oder 8,
**dadurch gekennzeichnet, dass** in als solcher bekannten Weise die Haken (30) zwischen Ausschnitten (35) gebildet sind, die an den Längsseiten (28) des Trägers ausgebildet sind

10. Vorrichtung nach einem der Ansprüche 7 bis 9,
**dadurch gekennzeichnet, dass** die Abdeckung (16) Anschläge (36) aufweist, die an den Haken anliegen, um diese zu fixieren, wenn sie mit den inneren Längswänden (26) der beiden Nuten (13) eines Kanals in Eingriff sind.

11. Vorrichtung nach Anspruch 10,
**dadurch gekennzeichnet, dass** der Träger Öffnungen (40) aufweist, die den Haken benachbart sind und in die die Anschläge (36) beim Zusammenfügen der Abdeckung und des Trägers eingreifen.

12. Vorrichtung nach einem der vorhergehenden Ansprüche,
**dadurch gekennzeichnet, dass** der Träger (15) allgemein die Form eines Rahmens hat, der so dimensioniert ist, dass er wenigstens ein Installationsgerät aufnimmt.

13. Vorrichtung nach einem der vorhergehenden Ansprüche,
**dadurch gekennzeichnet, dass** der Träger und die Abdeckung mit als solchen bekannten Rastmitteln (42, 44) versehen sind, durch die diese in ihrer Stellung auf dem Kanal aneinander befestigt werden können.

14. Vorrichtung nach Anspruch 13,
**dadurch gekennzeichnet, dass** die Rastmittel aus Löchern (42), die im Träger ausgebildet sind, und aus Zähnen (44), die an der Innenseite der Abdeckung vorstehen, gebildet sind.

15. Vorrichtung nach einem der vorhergehenden Ansprüche,
**dadurch gekennzeichnet, dass** wenigstens eine quer laufende Seitenfläche des Trägers mit Montageelementen (48, 49) versehen ist, die ausgebildet sind, um mit komplementären Montageelementen eines ähnlichen Trägers zusammenzuwirken, wobei die beiden Träger in einem derartigen Kanal nebeneinander montiert und Seite an Seite angesetzt sind.

16. Vorrichtung nach einem der vorhergehenden Ansprüche,
**dadurch gekennzeichnet, dass** der Träger Mittel (66) zur Montage eines Isoliermittels (58) umfasst.
